# EUROPÄISCHE PATENTANMELDUNG

(11) **EP 4 089 379 A1**
(43) Veröffentlichungstag der Anmeldung: **16.11.2022**
(21) Anmeldenummer: 22171980.0
(22) Anmeldetag: 06.05.2022
(51) Int. Cl.: G01J 1/42, B05D 3/06

(54) **UV-BESTRAHLUNGSVORRICHTUNG FÜR BESCHICHTUNGSANLAGEN SOWIE VERFAHREN ZUR QUALITÄTSSICHERUNG**

(30) Priorität: 10.05.2021 DE 102021112174
(71) Anmelder: Robert Bürkle GmbH, 72250 Freudenstadt (DE)
(72) Erfinder: Meisriemel, Oliver, 75203 Königsbach-Stein (DE)
(74) Vertreter: LBP Lemcke, Brommer & Partner Patentanwälte mbB

(57) **Zusammenfassung**

Die Erfindung begrifft eine UV-Bestrahlungsvorrichtung für Beschichtungsanlagen zum Beschichten von starren oder folienartigen Werkstücken, insbesondere Möbelteilen,
mit einer Transportvorrichtung 1 zum Transportieren von mit Beschichtungsmaterial versehenen Werkstücken von einem Einlass 3 zu einem Auslass 4 durch die UV-Bestrahlungsvorrichtung,
mit einer UV-Lichtquelle 7, die in der Regel oberhalb der Transportvorrichtung 1 angeordnet ist, um die beschichteten Werkstücke in einem zwischen dem Einlass 3 und dem Auslass 4 vorgesehenen Bestrahlungsbereich 6 mit UV-Licht zu bestrahlen,
mit einem Reflektor 8 oder einer Abdeckung 12, die die UV-Lichtquelle 7 nach oben abschirmen,
und mit einem Gehäuse 2 zum Abdecken des Bestrahlungsbereichs 6 und der UV-Lichtquelle 7, das sich in der Regel oberhalb der Transportvorrichtung 1 zumindest vom Einlass 3 bis zum Auslass 4 der UV-Bestrahlungsvorrichtung erstreckt.

Im Gehäuse ist ein Sensor 9 einer Messvorrichtung 10 zur direkten oder indirekten automatisierten Messung des Strahlungsflusses der UV-Lichtquelle 7 angeordnet, und der Sensor ist insbesondere fest oder beweglich am Gehäuse 2 oder einer Halterung angebracht.

Die Erfindung betrifft außerdem ein Verfahren zur Qualitätssicherung unter Verwendung dieser UV-Bestrahlungsvorrichtung.

## Beschreibung

Die Erfindung betrifft eine UV-Bestrahlungsvorrichtung für Beschichtungsanlagen, insbesondere Spritz-, Walz- und Gießlackieranlagen, zum Beschichten von folienartigen oder starren, insbesondere plattenförmigen Werkstücken, insbesondere Möbelteilen im Durchlaufverfahren nach dem Oberbegriff des Anspruchs 1 sowie ein Verfahren zur Qualitätssicherung in einer solchen UV-Bestrahlungsvorrichtung zum teilweisen oder vollständigen Vernetzen oder Aushärten der Beschichtung von frisch beschichteten Werkstücken, insbesondere Möbelteilen nach dem Oberbegriff des Anspruchs 8.

Eine UV-Bestrahlungsvorrichtung der vorliegenden Art wird vor allem zum Vernetzen oder Aushärten eines auf plattenförmigen Werkstücken frisch aufgetragenen Lacks verwendet; sie ist in diesem Fall in einer Spritz-, Walz- oder Gießlackieranlage den Spritz- oder Gießlackiermaschinen oder den Walzenauftragsmaschinen zum Aufbringen von Lack auf die plattenförmigen Werkstücke nachgeschaltet, um eine frisch aufgetragene UV-Lackschicht mit UV-Licht zu bestrahlen und hierdurch eine Teilpolymerisation und/oder volle Durchhärtung der Lackschicht zu bewirken.

Spritz-, Walz- und Gießlackieranlagen zum Aufbringen von UV-aushärtbaren Lacken finden insbesondere Verwendung beim Beschichten von furnierten Möbelteilen, Fußbodenteilen, Parkettelementen und Holzwerkstoffplatten aller Art, insbesondere Faserplatten. Insbesondere in Spritzlackieranlagen können auch Werkstücke beschichtet werden, die keine ebene Oberfläche aufweisen.

UV-aushärtbare Lacke sind kosteneffizient und ressourcenschonend, da sie weitgehend ohne Lösungsmittel auskommen, die bei der Trocknung der Lackschicht verdampfen. Aus dem gleichen Grund sind sie umweltverträglicher als herkömmliche lösemittelhaltige Lacke. Sie haben allerdings beim Aushärten spezifische Herausforderungen, da das in die frisch aufgebrachte Lackschicht eingestrahlte UV-Licht eine bestimmte Lichtmenge bzw. Mindest-Strahlungsenergie pro Lackvolumen in die Lackschicht einbringen muss, um die Vernetzung des Lacks in Gang zu bringen und so lange aufrecht zu erhalten, bis die Vernetzung und damit die Aushärtung des Lacks abgeschlossen ist. Wird zu wenig Energie eingestrahlt, wird der Lack nicht vollständig ausgehärtet, was in automatisiert arbeitenden Lackieranlagen kaum erkennbar ist und im Zweifel erst beim Weiterverarbeiten der lackierten Gegenstände oder erst beim Kunden auffällt.

Diese Vorteile und besonderen Herausforderungen betreffen auch UV-aushärtbare Beschichtungen, die nicht als Lack im engeren Sinne bezeichnet werden können.

Als UV-Lichtquelle in einer UV-Bestrahlungsvorrichtung der vorliegenden Art werden üblicherweise Gasentladungsröhren, insbesondere Metalldampflampen, sowie UV-LED-Lampen verwendet. Die UV-Lichtquelle ist üblicherweise oberhalb einer Transportvorrichtung angeordnet, die zum Transportieren von frisch beschichteten Werkstücken von einem Einlass zu einem Auslass der UV-Bestrahlungsvorrichtung dient, sodass die UV-Lichtquelle die Werkstücke in einem zwischen dem Einlass und dem Auslass vorgesehenen Bestrahlungsbereich mit UV-Licht bestrahlen kann. In Spezialanfertigungen von UV-Bestrahlungsvorrichtungen werden Werkstücke auch von unten bestrahlt, und zwar durch eine für UV-Licht transparente Transportvorrichtung oder auch durch das Werkstück hindurch, wenn dieses für UV-Licht durchlässig ist. In diesem Fall ist die UV-Lichtquelle unterhalb der Transportvorrichtung angeordnet, um einen nach unten orientierten Bestrahlungsbereich mit UV-Licht zu bestrahlen.

Bei einer Verwendung von Gasentladungsröhren schirmt üblicherweise ein Reflektor die UV-Lichtquelle nach oben (bzw. in der eben genannten Spezialanfertigung nach unten) ab und richtet das UV-Licht auf den Bestrahlungsbereich. UV-LED-Lampen richten ihr UV-Licht mittels einer vorderseitig auf die LEDs aufgebrachten optischen Linsenanordnung auf den Bestrahlungsbereich, wobei die LEDs rückseitig auf einer Abdeckung befestigt sind, die dem LED-Array mechanische Festigkeit verleiht, die Kühlung der LEDs gewährleistet und das UV-Licht abschirmt.

Nicht zuletzt aus Sicherheitsgründen ist in beiden Fällen ein Gehäuse vorgesehen, das den Bestrahlungsbereich und die UV-Lichtquelle abdeckt und sich zumindest vom Einlass bis zum Auslass der UV-Bestrahlungsstation oberhalb (in Spezialausführung alternativ oder zusätzlich: unterhalb) der Transportvorrichtung erstreckt. Sowohl der Einlass als auch der Auslass sind im Allgemeinen mit Lichtschutzvorhängen versehen, um etwa anwesende Personen vor dem UV-Licht zu schützen.

Übliche UV-Lichtquellen weisen oft sehr unterschiedliche Lichtstärken bzw. Strahlstärken (Strahlungsfluss durch Raumwinkel, gemessen in W/sr) bei identischer Leistungsaufnahme auf. Besonders unangenehm ist es jedoch, dass die Strahlstärke üblicher UV-Lichtquellen sich mit der Zeit verändert, ohne dass man dies an einer sich verändernden Leistungsaufnahme erkennen könnte.

Zur Qualitätssicherung ist es daher unerlässlich, die tatsächliche, von der UV-Lichtquelle in den Bestrahlungsbereich eingestrahlte Bestrahlungsstärke (Strahlungsfluss durch Empfängerfläche, gemessen in W/m²) oder den Strahlungsfluss, aus dem sich die Bestrahlungsstärke errechnen lässt, initial und periodisch zu überprüfen. Hierzu wird üblicherweise ein Strahlungsmessgerät auf die Transportvorrichtung gelegt und bei eingeschalteter UV-Lichtquelle durch den Bestrahlungsbereich gefahren. Da ein solches Strahlungsmessgerät oft nicht ohne weiteres durch den Einlass und den Auslass der UV-Bestrahlungsstation hindurchtransportiert werden kann, insbesondere, weil Lichtschutzvorhänge stören oder die lichte Weite für das Messgerät nicht ausreicht, ist die periodische Überprüfung des Strahlungsflusses bzw. der Bestrahlungsstärke nicht sehr komfortabel und wird daher gerne vergessen.

Der Erfindung liegt die Aufgabe zugrunde, eine UV-Bestrahlungsstation der eingangs genannten Art sowie ein Verfahren zur Qualitätssicherung in einer UV-Bestrahlungsstation vorzuschlagen, mit denen eine Qualitätssicherung gegenüber dem erwähnten Stand der Technik einfacher ist bzw. verbessert wird.

Gelöst ist diese Aufgabe durch eine UV-Bestrahlungsvorrichtung mit den Merkmalen des Anspruchs 1 sowie durch ein Verfahren mit den Merkmalen des Anspruchs 8. Bevorzugte Ausgestaltungen der erfindungsgemäßen UV-Bestrahlungsvorrichtung finden sich in den Ansprüchen 2 bis 7; zweckmäßige Weiterbildungen des erfindungsgemäßen Verfahrens sind in den Ansprüchen 9 bis 19 niedergelegt.

Eine UV-Bestrahlungsvorrichtung gemäß der vorliegenden Erfindung umfasst also eine Transportvorrichtung zum Transportieren von starren oder folienartigen, frisch mit Beschichtungsmaterial versehenen Werkstücken von einem Einlass zu einem Auslass durch die UV-Bestrahlungsvorrichtung, eine UV-Lichtquelle, die oberhalb und/oder unterhalb der Transportvorrichtung angeordnet ist, um die beschichteten Werkstücke in einem zwischen dem Einlass und dem Auslass vorgesehenen Bestrahlungsbereich mit UV-Licht zu bestrahlen, eine Abdeckung oder einen Reflektor, der die UV-Lichtquelle auf ihrer dem Bestrahlungsbereich abgewandten Seite abschirmt und das UV-Licht im Falle des Reflektors auf den Bestrahlungsbereich richtet, und ein Gehäuse zum Abdecken des Bestrahlungsbereichs und der UV-Lichtquelle, das sich oberhalb und/oder unterhalb der Transportvorrichtung zumindest vom Einlass bis zum Auslass der UV-Bestrahlungsvorrichtung erstreckt. Im Gehäuse ist ein Sensor einer Messvorrichtung angeordnet, die zur automatisierten Messung des Strahlungsflusses der UV-Lichtquelle dient, wobei der Sensor insbesondere fest oder beweglich am Gehäuse oder an einer Halterung angebracht ist. Der Strahlungsfluss (Strahlungsenergie durch Zeit, mit der SI-Einheit Watt) der UV-Lichtquelle muss hierbei nicht direkt gemessen werden; es kann auch durch Messung der Strahlstärke (Strahlungsfluss durch Raumwinkel) oder der Bestrahlungsstärke (Strahlungsfluss durch Empfängerfläche) der Strahlungsfluss berechnet, d.h. indirekt gemessen werden. Aus dem Strahlungsfluss oder auch der Bestrahlungsstärke kann, unter Berücksichtigung der Bestrahlungsfläche, des Abstands der UV-Lichtquelle von der Bestrahlungsfläche, der Transportgeschwindigkeit der Transportvorrichtung und gegebenenfalls anderer Randbedingungen auf die in die frisch aufgebrachten Beschichtungen der Werkstücke eingestrahlte Energie geschlossen werden.

Die erfindungsgemäße UV-Bestrahlungsvorrichtung ermöglicht somit das erfindungsgemäße Verfahren zur Qualitätssicherung, bei dem unkompliziert initial, periodisch oder auch kontinuierlich der von der UV-Lichtquelle abgegebene Strahlungsfluss überprüft bzw. überwacht werden kann. Somit werden etwaige Schwankungen oder alterungsbedingte Verringerungen des abgegebenen Strahlungsflusses der UV-Lichtquelle rechtzeitig erkannt, bevor es zu Qualitätsproblemen bei der Aushärtung (Vernetzung) der Beschichtung kommen kann.

Besonders bevorzugt ist bei einer Verwendung von Gasentladungsröhren als UV-Lichtquelle der Sensor der Messvorrichtung in einem vom Reflektor abgeschirmten Bereich innerhalb des Gehäuses angeordnet, und der Reflektor ist solcherart um die UV-Lichtquelle drehbar, dass er das UV-Licht wahlweise auf den Sensor richtet. Dies hat den Vorteil, dass der Sensor und gegebenenfalls weitere Teile der Messvorrichtung nur zeitweise dem UV-Licht ausgesetzt sind, was die Lebensdauer des Sensors und gegebenenfalls der Messvorrichtung naturgemäß erhöht.

Hierbei ist es besonders bevorzugt, wenn der Reflektor solcherart um die UV-Lichtquelle drehbar ist, dass er wahlweise den Bestrahlungsbereich gegen die UV-Lichtquelle abschirmt, und zwar vorzugsweise so, dass er das UV-Licht nach oben (in Spezialfällen nach unten, in jedem Fall aber vom Bestrahlungsbereich weg) in das Gehäuse richtet. Hierdurch wird der Bestrahlungsbereich abgeschattet, wenn keine Werkstücke bestrahlt werden sollen. Dies schützt die Transportvorrichtung vor dem UV-Licht. Auch der Wärmeeintrag durch die Bestrahlung mit UV-Licht wird so vom Bestrahlungsbereich abgehalten und in den oberen (bzw. unteren) Teil des Gehäuses verlagert, wo in der Regel ohnehin eine Kühlung bzw. Ventilation vorgesehen ist, um eine Überhitzung der UV-Lichtquelle zu vermeiden. In diesem Fall kann der Sensor der Messvorrichtung ganz einfach oberhalb (bzw. unterhalb) der UV-Lichtquelle und dem Reflektor fest angeordnet werden.

Der Reflektor der erfindungsgemäßen UV-Bestrahlungsvorrichtung weist vorzugsweise eine Reflektorfläche auf, die aus einer zum Bestrahlungsbereich parallelen Geradenschar zusammengesetzt ist und insbesondere einen aufgeschnittenen parabolischen Zylinder bildet. Dies ist besonders vorteilhaft bei UV-Lichtquellen mit langgestreckter Form. Zweckmäßigerweise kann ein solcher Reflektor um eine Achse, in der die UV-Lichtquelle liegt, drehbar angebracht sein.

Soweit UV-LED-Lampen als UV-Lichtquelle verwendet werden, kann der Sensor der Messvorrichtung in entsprechender Weise in einem von der Abdeckung abgeschirmten Bereich innerhalb des Gehäuses angeordnet sein, wobei dann die UV-Lichtquelle mitsamt ihrer Abdeckung, die normalerweise ohnehin fest verbaut ist, solcherart gedreht werden kann, dass sie das UV-Licht wahlweise auf den Sensor richtet.

Vorzugsweise kann die UV-Lichtquelle zusammen mit der Abdeckung hierbei solcherart gedreht werden, dass die Abdeckung wahlweise den Bestrahlungsbereich gegen die UV-Lichtquelle abschirmt. Bevorzugt ist die UV-Lichtquelle um ihre eigene Achse drehbar gehalten.

Die als UV-LED-Lampe vorliegende UV-Lichtquelle ist zweckmäßigerweise mit einer optischen Linseneinrichtung versehen, um das UV-Licht auf den Bestrahlungsbereich zu richten.

Der Sensor der Messvorrichtung kann auch in einem vom Reflektor bzw. von der Abdeckung abgeschirmten Bereich innerhalb des Gehäuses angeordnet und der Reflektor bzw. die Abdeckung gleichzeitig mit einer verschließbaren Öffnung oder einer verstellbaren Blende versehen sein, mittels der UV-Licht auf den Sensor ausgekoppelt werden kann, um eine Messung durchzuführen.

Der Sensor der Messvorrichtung, oder gegebenenfalls auch die gesamte Messvorrichtung kann alternativ auch beweglich am Gehäuse oder einer ortsfesten Halterung gehalten sein, um ihn bzw. sie wahlweise in das UV-Licht einzubringen oder aus diesem herauszunehmen, das auf den Bestrahlungsbereich gerichtet ist; im Falle einer UV-LED-Lampe muss diese dann zur Messung nicht um ihre Längsachse gedreht werden, und auch ein Drehen eines gegebenenfalls vorhandenen Reflektors ist dann nicht notwendig.

Hierbei wird der Sensor vorzugsweise nur dann in das auf den Bestrahlungsbereich gerichtete UV-Licht eingebracht, wenn sich kein Werkstück im Bestrahlungsbereich befindet, insbesondere wenn eine Lücke zwischen zwei durch den Bestrahlungsbereich transportierten Werkstücken den Bestrahlungsbereich passiert. Hierdurch werden Abschattungseffekte vermieden, die sich gegebenenfalls nachteilig auf das Ergebnis der Aushärtung auswirken können.

Diese Anordnung des Sensors in der Messposition ist dazu geeignet, den Strahlungsfluss bzw. eine Bestrahlungsstärke zu messen, die der Bestrahlungsstärke im Bestrahlungsbereich am nächsten kommt. Hierzu ist der Sensor der Messvorrichtung zweckmäßigerweise mit einer Bewegungsvorrichtung, die über eine Steuerungseinrichtung mit einem Antrieb der Transportvorrichtung in Verbindung steht, am Gehäuse oder einer ortsfesten Halterung gehalten.

Um kostengünstige Sensoren für die Messung des Strahlungsflusses verwenden zu können, die in der Regel wenig UV-beständig sind, kann eine Schottvorrichtung für den Sensor der Messvorrichtung vorgesehen sein, um diesen, außer zu Zeiten einer Messung, vor UV-Licht, aber auch vor Wärmeeintrag und Belastungen durch Schmutzpartikel oder aggressive Gase zu schützen.

Das Gehäuse der erfindungsgemäßen UV-Bestrahlungsvorrichtung kann mit einer Anhebevorrichtung versehen sein, um ein Strahlungsmessgerät bzw. Radiometer mittels der Transportvorrichtung in den Bestrahlungsbereich einzubringen. Hierdurch wird es vereinfacht, die in den Bestrahlungsbereich eingestrahlte Bestrahlungsstärke von Zeit zu Zeit mittels eines Radiometers gegenzuprüfen, das auf der Transportvorrichtung in den Bestrahlungsbereich eingebracht wird.

Eine weitere bevorzugte Ausgestaltung der erfindungsgemäßen UV-Bestrahlungsvorrichtung besteht darin, dass im Gehäuse oder in dessen Nähe eine zweite UV-Lichtquelle als Reserve vorgehalten wird, die abhängig von den Messwerten der Messvorrichtung aktivierbar ist. Hierbei ist es zweckmäßig, dass bei Unterschreiten eines Schwellenwerts für die Bestrahlungsstärke bzw. den pro Flächeneinheit in den Bestrahlungsbereich eingebrachten Strahlungsfluss und/oder bei Überschreiten eines Schwellenwerts für die Veränderung des Strahlungsflusses der UV-Lichtquelle die als Ersatz vorgehaltene zweite UV-Lichtquelle aktiviert wird. Dies ermöglicht, mannlose Schichten beim Beschichten von Werkstücken zu fahren, ohne Gefahr zu laufen, bei einem signifikanten Abfall des Strahlungsflusses der UV-Lichtquelle Ausschuss zu produzieren.

Beim erfindungsgemäßen Verfahren wird vorzugsweise mittels der Messvorrichtung zumindest in vorgegebenen Intervallen oder Zeitfenstern der Strahlungsfluss der UV-Lichtquelle ermittelt und hieraus die in den Bestrahlungsbereich eingebrachte Bestrahlungsstärke (d.h. Strahlungsfluss pro Flächeneinheit des Bestrahlungsbereichs, also Strahlungsenergie pro Zeiteinheit und Flächeneinheit, gemessen in W/m²) errechnet wird. Hieraus kann dann, abhängig von der Transportgeschwindigkeit der Transportvorrichtung, die pro Flächeneinheit in die frisch beschichteten Werkstücke eingebrachte Energie ermittelt werden.

Wenn dies noch in das Verhältnis der momentan aufgenommenen Leistung der Lichtquelle gesetzt wird, können Rückschlüsse auf die Strahlungsausbeute und somit auf den Zustand der UV-Lichtquelle gezogen werden.

Mittels der Messvorrichtung kann der Strahlungsfluss der UV-Lichtquelle, neben einer Absolutmessung, auch in vorgegebenen Intervallen oder Zeitfenstern relativ zu früheren Messungen ermittelt werden, was, abhängig von der momentan aufgenommenen Leistung der UV-Lichtquelle, Veränderungen des Strahlungsflusses detektiert.

Hierbei ist es im Rahmen der Erfindung bevorzugt, wenn bei Unterschreiten eines Schwellenwerts für die in den Bestrahlungsbereich eingestrahlte Bestrahlungsstärke und/oder bei Überschreiten eines Schwellenwerts für die Veränderung des Strahlungsflusses der UV-Lichtquelle, die unter Berücksichtigung der aufgenommenen Leistung der UV-Lichtquelle bewertet wird, ein Warnhinweis generiert wird, und/oder eine als Ersatz vorgehaltene zweite UV-Lichtquelle aktiviert wird.

Die vorliegende Erfindung kann auch dahingehend weiterentwickelt werden, dass, abhängig von der in den Bestrahlungsbereich eingebrachten Bestrahlungsstärke (Strahlungsenergie pro Zeit und Fläche) und/oder von einer Veränderung des Strahlungsflusses der UV-Lichtquelle, die Leistungsaufnahme der UV-Lichtquelle nachgeregelt wird, um etwaige Abweichungen vom Sollwert der Bestrahlungsstärke oder des Strahlungsflusses zu kompensieren. Es liegt auf der Hand, dass hierdurch die Qualitätssicherung automatisiert wird und sich insbesondere bei mannlosen Schichten große Vorteile ergeben.

Die Erfindung kann vorteilhafterweise auch dazu dienen, die Linearität einer Leistungsregelung oder die Kennlinie der UV-Lichtquelle zu prüfen, indem die in den Bestrahlungsbereich eingebrachte Bestrahlungsstärke und/oder eine Veränderung des Strahlungsflusses der UV-Lichtquelle in Abhängigkeit von der momentan aufgenommenen Leistung der UV-Lichtquelle ermittelt wird, während die aufgenommene Leistung verändert wird, gegebenenfalls in Stufen.

Die in den Bestrahlungsbereich eingestrahlte Bestrahlungsstärke kann für eine weitere Optimierung der Qualitätssicherung von Zeit zu Zeit mittels eines auf der Transportvorrichtung in den Bestrahlungsbereich eingebrachten Radiometers gegengeprüft werden. Die erfindungsgemäße Messvorrichtung kann so fortlaufend nachkalibriert werden.

Anhand der beigefügten Zeichnungen werden im Folgenden zwei Ausführungsbeispiele für eine erfindungsgemäße UV-Bestrahlungsstation und ein erfindungsgemäß ausgestaltetes Verfahren näher beschrieben und erläutert, wobei sich auch aus dieser Beschreibung erfindungswesentliche Merkmale ergeben können, ohne dass die Erfindung auf die beschriebenen Bespiele beschränkt ist. Es zeigen:
- Figur 1: eine schematische isometrische Darstellung einer erfindungsgemäß ausgestalteten UV-Bestrahlungsstation einer Lackieranlage;
- Figur 2: einen Schnitt in seitlicher Ansicht der UV-Bestrahlungsstation aus Figur 1;
- Figur 3: eine schematische isometrische Darstellung wie Figur 1, jedoch eines zweiten Ausführungsbeispiels;
- Figur 4: einen Schnitt wie Figur 2, jedoch eines zweiten Ausführungsbeispiels.

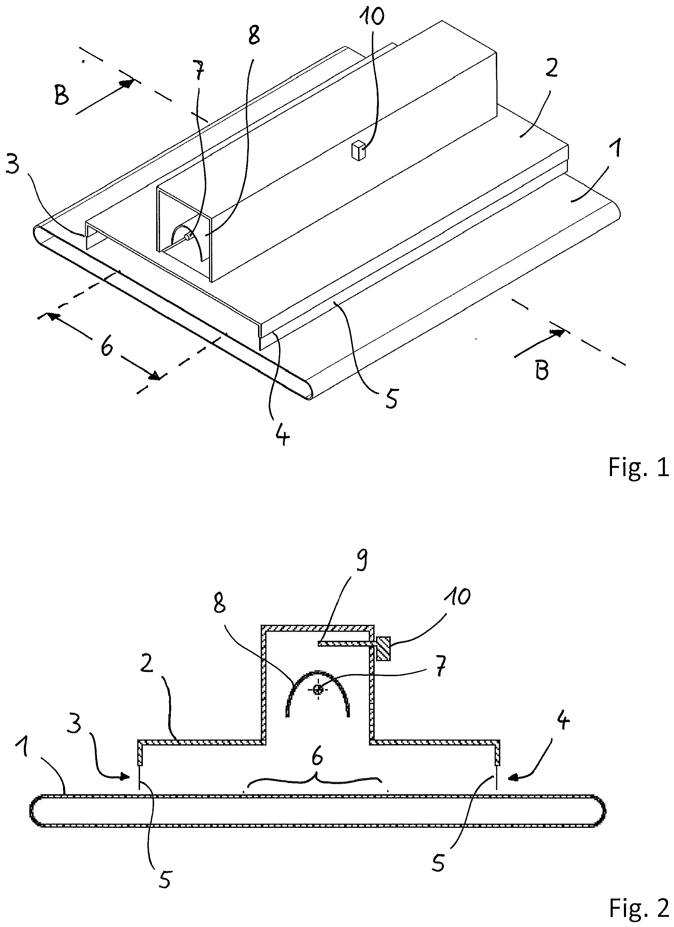

Figur 1 ist eine isometrische Darstellung (schematisch) eines ersten Ausführungsbeispiels für eine erfindungsgemäß ausgestaltete UV-Bestrahlungsstation. Diese umfasst eine Transportvorrichtung 1, hier ausgestaltet als umlaufendes Transportband, auf das plattenförmige Werkstücke (nicht dargestellt) aufgelegt werden, ein Gehäuse 2 oberhalb der Transportvorrichtung 1, das sich von einem Einlass 3 bis zu einem Auslass 4 erstreckt, die beide mit jeweils einem Lichtschutzvorhang 5 gegen UV-Licht abgedichtet sind.

Zwischen dem Einlass 3 und dem Auslass 4 befindet sich ein Bestrahlungsbereich 6, in dem die auf der Transportvorrichtung 1 vom Einlass 3 zum Auslass 4 transportierten Werkstücke mit UV-Licht bestrahlt werden, um frisch aufgebrachten Lack auszuhärten. Oberhalb des Bestrahlungsbereichs 6 ist innerhalb des sich hier nach oben erweiternden Gehäuses 2 eine UV-Lichtquelle 7 angeordnet, die sich stabförmig über die gesamte Breite des Bestrahlungsbereichs 6 erstreckt. Es handelt sich vorliegend um eine röhrenförmige Metalldampflampe. Diese ist mit einem Reflektor 8 versehen, der die UV-Lichtquelle 7 nach oben abschirmt und das UV-Licht auf den Bestrahlungsbereich 6 richtet.

Figur 2 ist eine Schnittdarstellung entlang der Ebene B-B in Figur 1. Wie hier ersichtlich ist, sitzt oberhalb des Reflektors 8 im Gehäuse 2 ein Sensor 9 für UV-Licht, der Teil einer am Gehäuse 2 befestigten Messvorrichtung 10 ist.

Der Reflektor 8 kann um die Längsachse der UV-Lichtquelle 7 gedreht werden, insbesondere um 180°, so dass er das UV-Licht der UV-Lichtquelle 7 nach oben in das Gehäuse 2 strahlt und dort insbesondere auf den Sensor 9 der Messvorrichtung 10. Gleichzeitig schattet er den Bestrahlungsbereich 6 ab, so dass dieser während der Messung - und allgemein während Produktionspausen - nicht mit UV-Licht beaufschlagt wird.

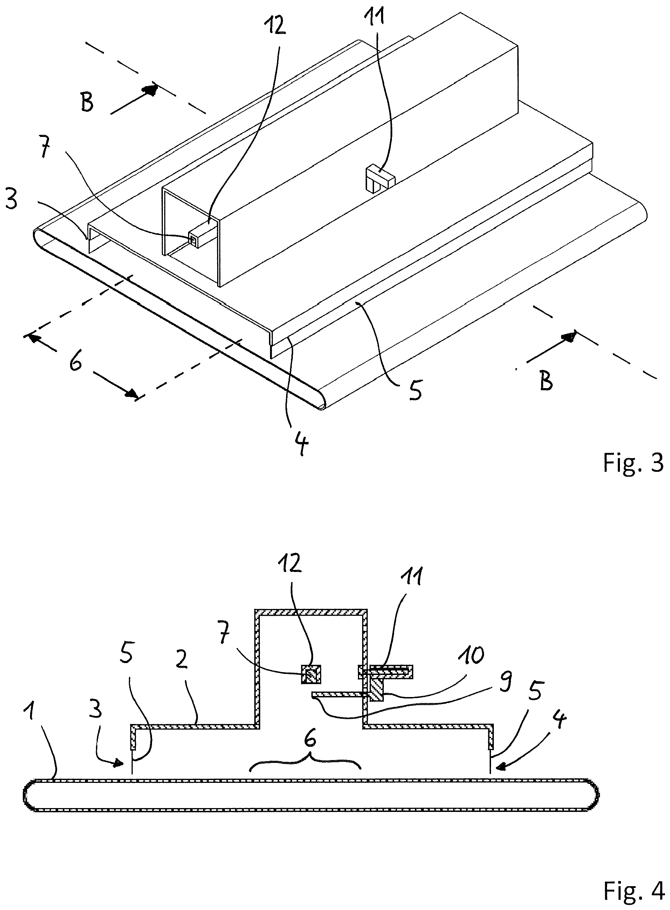

Ein alternatives Ausführungsbeispiel zeigt Figur 3, in einer Darstellung wie Figur 1. Gleiche Elemente sind hierbei mit gleichen Bezugszeichen versehen, sodass insoweit größtenteils auf die Beschreibung der Figur 1 Bezug genommen werden kann. Allerdings ist die UV-Lichtquelle 7 diesmal als LED-UV-Lichtquelle ausgebildet und dementsprechend vorderseitig (hier nach unten gerichtet) mit einer optischen Linseneinrichtung sowie rückseitig und seitlich mit einer Abdeckung 12 ausgestattet, die gleichzeitig als Einfassung der LED-Arrays und zur Kühlung derselben dient.

Figur 4 ist eine Schnittdarstellung entlang der Ebene B-B aus Figur 3, entsprechend Figur 2: Hier sind die Transportvorrichtung 1, das Gehäuse 2 mit Einlass 3 und Auslass 4 und der Bestrahlungsbereich 6 identisch wie im vorangehenden Ausführungsbeispiel ausgestaltet. Die UV-Lichtquelle 7 ist, wie oben erwähnt, als LED-UV-Lichtquelle ausgebildet und dementsprechend vorderseitig (hier nach unten gerichtet) mit einer optischen Linseneinrichtung sowie rückseitig und seitlich mit einer Abdeckung 12 ausgestattet, die gleichzeitig als Einfassung der LED-Arrays und zur Kühlung derselben dient. Die Messvorrichtung 10 mitsamt ihrem Sensor 9 ist über eine Bewegungsvorrichtung 11 am Gehäuse 2 befestigt, so dass der Sensor 9 wahlweise in das von der UV-Lichtquelle 7 in den Bestrahlungsbereich 6 abgestrahlte UV-Licht eingebracht werden kann, wie in Figur 3 gezeigt, oder aus diesem UV-Licht herausgenommen werden kann (in Figur 3 nicht gezeigt). Es empfiehlt sich, den Sensor 9 nur dann in die gezeigte Messstellung zu bringen, wenn im Bestrahlungsbereich 6 kein Werkstück zur Aushärtung befindlich ist, um Abschattungseffekte zu vermeiden. Bei entsprechend kleinformatiger Ausgestaltung des Sensors 9 können die Abschattungseffekte jedoch so gering sein, dass sie nicht ins Gewicht fallen und Messungen auch im laufenden Betrieb vorgenommen werden können. Gegebenenfalls können auch Lücken zwischen zwei durchlaufenden Werkstücken zur Messung genutzt werden.

Wie die vorliegenden Ausführungsbeispiele verdeutlichen, ermöglicht die vorliegende Erfindung also, einen Leistungsabfall der UV-Lichtquelle 7 rechtzeitig zu bemerken, um eine schlechtere Qualität der lackierten Werkstücke oder gar eine Produktion von Ausschuss vermeiden zu können. Es ergibt sich hierdurch eine sehr hohe Prozesssicherheit, neben dem Vorteil der Automatisierung einer bislang händisch durchgeführten Kontrolle der von der UV-Lichtquelle abgegebenen Leistung.

Die Prozesssicherheit wird durch Nachregeln bei erkanntem Leistungsabfall der UV-Lichtquelle 7 noch deutlich erhöht, wobei die Strahlungsausbeute der UV-Lichtquelle 7 abhängig von der aufgenommenen Leistung jederzeit überprüft werden kann.

Die Messvorrichtung 10 kann jederzeit durch ein händisch auf die Transportvorrichtung 1 gelegtes Radiometer mit Absolutwerten für die Bestrahlungsstärke des Bestrahlungsbereichs 6 abgeglichen werden, wodurch auch eine initiale Kalibrierung der UV-Lichtquelle 7 und der von dieser aufgenommenen Leistung möglich ist. Die Linearität der Strahlungsausbeute bei variierender aufgenommener Leistung kann erfindungsgemäß ebenfalls jederzeit überprüft werden.

## Patentansprüche

1. UV-Bestrahlungsvorrichtung für Beschichtungsanlagen, insbesondere Spritz-, Walz- und Gießlackieranlagen, zum Beschichten von starren oder folienartigen Werkstücken, insbesondere Möbelteilen,
mit einer Transportvorrichtung (1) zum Transportieren von mit Beschichtungsmaterial versehenen Werkstücken von einem Einlass (3) zu einem Auslass (4) durch die UV-Bestrahlungsvorrichtung,
mit einer UV-Lichtquelle (7), die oberhalb und/oder unterhalb der Transportvorrichtung (1) angeordnet ist, um die Werkstücke zum teilweisen oder vollständigen Vernetzen und/oder Aushärten der Beschichtung in einem zwischen dem Einlass (3) und dem Auslass (4) vorgesehenen Bestrahlungsbereich (6) mit UV-Licht zu bestrahlen,
mit einer Abdeckung (12) oder einem Reflektor (8), die oder der die UV-Lichtquelle (7) auf ihrer dem Bestrahlungsbereich (6) abgewandten Seite abschirmt, wobei der Reflektor (8) das UV-Licht außerdem auf den Bestrahlungsbereich (6) richtet,
und mit einem Gehäuse (2) zum Abdecken des Bestrahlungsbereichs (6) und der UV-Lichtquelle (7), das sich oberhalb und/oder unterhalb der Transportvorrichtung (1) zumindest vom Einlass (3) bis zum Auslass (4) der UV-Bestrahlungsvorrichtung erstreckt,
**dadurch gekennzeichnet,**
**dass** im Gehäuse (2) ein Sensor (9) einer Messvorrichtung (10) zur direkten oder indirekten automatisierten Messung des Strahlungsflusses der UV-Lichtquelle (7) angeordnet ist, wobei der Sensor (9) insbesondere fest oder beweglich am Gehäuse (2) oder an einer Halterung angebracht ist.

2. UV- Bestrahlungsvorrichtung nach Anspruch 1,
**dadurch gekennzeichnet,**
**dass** der Sensor (9) der Messvorrichtung (10) in einem vom Reflektor (8) abgeschirmten Bereich innerhalb des Gehäuses (2) angeordnet ist, und dass der Reflektor (8) solcherart um die UV-Lichtquelle (7) drehbar ist, dass er das UV-Licht wahlweise auf den Sensor (9) richtet, und insbesondere dass er wahlweise den Bestrahlungsbereich (6) gegen die UV-Lichtquelle (7) abschirmt, und vorzugsweise das UV-Licht vom Bestrahlungsbereich (6) weg, insbesondere nach oben in das Gehäuse (2) richtet.

3. UV- Bestrahlungsvorrichtung nach einem der Ansprüche 1 oder 2,
**dadurch gekennzeichnet,**
**dass** der Reflektor (8) eine Reflektorfläche aufweist, die aus einer zum Bestrahlungsbereich (6) parallelen Geradenschar zusammengesetzt ist, und die insbesondere als parabolischer Zylinder ausgebildet ist, wobei der Reflektor (8) vorzugsweise um eine Achse, in der die UV-Lichtquelle (7) liegt, drehbar gehalten ist.

4. UV- Bestrahlungsvorrichtung nach Anspruch 1,
**dadurch gekennzeichnet,**
**dass** der Sensor (9) der Messvorrichtung (10) in einem von der Abdeckung (12) abgeschirmten Bereich innerhalb des Gehäuses (2) angeordnet ist, und dass die UV-Lichtquelle (7) zusammen mit der Abdeckung (12) solcherart drehbar ist, dass sie das UV-Licht wahlweise auf den Sensor (9) richtet und insbesondere wahlweise den Bestrahlungsbereich (6) gegen die UV-Lichtquelle (7) abschirmt, wobei die UV-Lichtquelle (7) vorzugsweise mit einer optischen Linseneinrichtung versehen ist, um das UV-Licht auf den Bestrahlungsbereich (6) zu richten, und insbesondere um ihre eigene Achse drehbar gehalten ist.

5. UV- Bestrahlungsvorrichtung nach Anspruch 1,
**dadurch gekennzeichnet,**
**dass** der Sensor (9) der Messvorrichtung (10) in einem vom Reflektor (8) abgeschirmten Bereich innerhalb des Gehäuses (2) angeordnet ist, und dass der Reflektor (8) mit einer verschließbaren Öffnung oder einer verstellbaren Blende zum Auskoppeln von UV-Licht auf den Sensor (9) versehen ist.

6. UV- Bestrahlungsvorrichtung nach Anspruch 1,
**dadurch gekennzeichnet,**
**dass** der Sensor (9) der Messvorrichtung (10) beweglich am Gehäuse (2) oder einer ortsfesten Halterung gehalten ist, um wahlweise in das auf den Bestrahlungsbereich (6) gerichtete UV-Licht hineinzuragen oder aus diesem herausgenommen zu sein, wobei der Sensor (9) vorzugsweise mit einer Bewegungsvorrichtung (11), die über eine Steuerungseinrichtung mit einem Antrieb der Transportvorrichtung (1) in Verbindung steht, am Gehäuse (2) oder an einer ortsfesten Halterung gehalten ist, und wobei die Steuerungseinrichtung insbesondere solcherart programmiert ist, dass der Sensor (9) nur dann in das auf den Bestrahlungsbereich (6) gerichtete UV-Licht eingebracht wird und in dieses hineinragt, wenn sich kein Werkstück im Bestrahlungsbereich (6) befindet, insbesondere wenn eine Lücke zwischen zwei durch den Bestrahlungsbereich (6) transportierten Werkstücken den Bestrahlungsbereich (6) passiert.

7. UV- Bestrahlungsvorrichtung nach mindestens einem der Ansprüche 1 bis 6,
**dadurch gekennzeichnet,**
**dass** eine Schottvorrichtung für den Sensor (9) der Messvorrichtung (10) vorgesehen ist, um diesen, außer zu Zeiten einer Messung, vor UV-Licht zu schützen.

8. Verfahren zur Qualitätssicherung in einer UV- Bestrahlungsvorrichtung zum teilweisen oder vollständigen Vernetzen oder Aushärten der Beschichtung von mit Beschichtungsmaterial versehenen, starren oder folienartigen Werkstücken, insbesondere Möbelteilen, in einer Beschichtungsanlage, insbesondere einer Spritz-, Walz- oder Gießlackieranlage, wobei die mit Beschichtungsmaterial versehenen Werkstücke in einer UV-Bestrahlungsvorrichtung mit UV-Licht bestrahlt werden, indem die Werkstücke mittels einer Transportvorrichtung (1) von einem Einlass (3) zu einem Auslass (4) durch einen Bestrahlungsbereich (6) transportiert werden, in welchem eine UV-Lichtquelle (7), die oberhalb und/oder unterhalb der Transportvorrichtung (1) angeordnet ist, die Werkstücke zum teilweisen oder vollständigen Vernetzen und/oder Aushärten des Beschichtungsmaterials im Bestrahlungsbereich (6) mit UV-Licht bestrahlt, wobei eine Abdeckung (12) oder ein Reflektor (8) die UV-Lichtquelle (7) auf der dem Bestrahlungsbereich (6) abgewandten Seite der UV-Lichtquelle (7) abschirmt und zumindest im Falle des Reflektors (8) das UV-Licht auf den Bestrahlungsbereich (6) richtet, und wobei ein Gehäuse (2), das sich oberhalb und/oder unterhalb der Transportvorrichtung (1) zumindest vom Einlass (3) bis zum Auslass (4) der UV- Bestrahlungsvorrichtung erstreckt, den Bestrahlungsbereich (6) und die UV-Lichtquelle (7) abdeckt,
**dadurch gekennzeichnet,**
**dass** eine Messvorrichtung (10) mit einem Sensor (9) zur direkten oder indirekten automatisierten Messung des Strahlungsflusses der UV-Lichtquelle (7) verwendet wird, wobei der Sensor (9) zumindest zeitweise im Gehäuse (2) angeordnet und insbesondere fest oder beweglich am Gehäuse (2) oder einer Halterung angebracht wird.

9. Verfahren nach Anspruch 8,
**dadurch gekennzeichnet,**
**dass** der Sensor (9) der Messvorrichtung (10) in einem vom Reflektor (8) abgeschirmten Bereich innerhalb des Gehäuses (2) angeordnet wird, und dass der Reflektor (8) von Zeit zu Zeit solcherart um die UV-Lichtquelle (7) gedreht wird, dass er das UV-Licht auf den Sensor (9) richtet, wobei der Reflektor (8) insbesondere solcherart um die UV-Lichtquelle (7) gedreht wird, dass er den Bestrahlungsbereich (6) gegen die UV-Lichtquelle (7) abschirmt, vorzugsweise dass er das UV-Licht vom Bestrahlungsbereich (6) weg, insbesondere nach oben in das Gehäuse (2) richtet.

10. Verfahren nach Anspruch 8,
**dadurch gekennzeichnet,**
**dass** der Sensor (9) der Messvorrichtung (10) in einem von der Abdeckung (12) abgeschirmten Bereich innerhalb des Gehäuses (2) angeordnet wird, und dass die UV-Lichtquelle (7) zusammen mit der Abdeckung (12) von Zeit zu Zeit solcherart gedreht wird, dass sie das UV-Licht wahlweise auf den Sensor (9) richtet, wobei insbesondere die Abdeckung (12) wahlweise den Bestrahlungsbereich (6) gegen die UV-Lichtquelle (7) abschirmt, und wobei die UV-Lichtquelle (7) das UV-Licht vorzugsweise mit einer optischen Linseneinrichtung auf den Bestrahlungsbereich (6) richtet und insbesondere um ihre eigene Achse gedreht wird.

11. Verfahren nach Anspruch 8,
**dadurch gekennzeichnet,**
**dass** der Sensor (9) der Messvorrichtung (10) beweglich am Gehäuse (2) oder beweglich an einer ortsfesten Halterung gehalten wird und wahlweise in das auf den Bestrahlungsbereich (6) gerichtete UV-Licht eingebracht oder aus diesem herausgenommen wird, wobei er vorzugsweise nur dann in das auf den Bestrahlungsbereich (6) gerichtete UV-Licht eingebracht wird und in dieses hineinragt, wenn sich kein Werkstück im Bestrahlungsbereich (6) befindet, insbesondere wenn eine Lücke zwischen zwei durch den Bestrahlungsbereich (6) transportierten Werkstücken den Bestrahlungsbereich (6) passiert.

12. Verfahren nach einem der Ansprüche 8 bis 11,
**dadurch gekennzeichnet,**
**dass** mittels der Messvorrichtung (10) zumindest in vorgegebenen Intervallen oder Zeitfenstern der Strahlungsfluss der UV-Lichtquelle (7) ermittelt und hieraus die in den Bestrahlungsbereich (6) eingebrachte Bestrahlungsstärke errechnet wird.

13. Verfahren nach einem der Ansprüche 8 bis 12,
**dadurch gekennzeichnet,**
**dass** mittels der Messvorrichtung (10) in vorgegebenen Intervallen oder Zeitfenstern der Strahlungsfluss der UV-Lichtquelle (7) absolut oder relativ zu früheren Messungen ermittelt und, abhängig von der momentan aufgenommenen Leistung der UV-Lichtquelle (7), Veränderungen des Strahlungsflusses detektiert werden.

14. Verfahren nach einem der Ansprüche 12 oder 13,
**dadurch gekennzeichnet,**
**dass** bei Unterschreiten eines Schwellenwerts für die in den Bestrahlungsbereich (6) eingebrachte Bestrahlungsstärke und/oder bei Überschreiten eines Schwellenwerts für die Veränderung des Strahlungsflusses der UV-Lichtquelle (7), abhängig von der aufgenommenen Leistung der UV-Lichtquelle (7), ein Warnhinweis generiert wird.

15. Verfahren nach mindestens einem der Ansprüche 12 bis 14,
**dadurch gekennzeichnet,**
**dass**, abhängig von der in den Bestrahlungsbereich (6) eingebrachten Bestrahlungsstärke und/oder von einer Veränderung des Strahlungsflusses der UV-Lichtquelle (7), die Leistungsaufnahme der UV-Lichtquelle (7) nachgeregelt wird.

16. Verfahren nach mindestens einem der Ansprüche 12 bis 15,
**dadurch gekennzeichnet,**
**dass** die Linearität einer Leistungsregelung oder die Kennlinie der UV-Lichtquelle (7) geprüft wird, indem die in den Bestrahlungsbereich (6) eingebrachte Bestrahlungsstärke und/oder eine Veränderung des Strahlungsflusses der UV-Lichtquelle (7) abhängig von der momentan aufgenommenen Leistung der UV-Lichtquelle (7) ermittelt wird, wobei vorzugsweise die aufgenommene Leistung der UV-Lichtquelle (7) unter Berücksichtigung der ermittelten Kennlinie der UV-Lichtquelle (7) geregelt wird, insbesondere mittels eines elektronischen Vorschaltgeräts.

17. Verfahren nach mindestens einem der Ansprüche 12 bis 16,
**dadurch gekennzeichnet,**
**dass** bei Unterschreiten eines Schwellenwerts für den Strahlungsfluss oder für die in den Bestrahlungsbereich eingebrachte Bestrahlungsstärke und/oder bei Überschreiten eines Schwellenwerts für die Veränderung des Strahlungsflusses der UV-Lichtquelle (7) eine als Ersatz vorgehaltene zweite UV-Lichtquelle aktiviert wird.

18. Verfahren nach mindestens einem der Ansprüche 12 bis 17,
**dadurch gekennzeichnet,**
**dass** die in den Bestrahlungsbereich (6) eingestrahlte Bestrahlungsstärke von Zeit zu Zeit mittels eines auf der Transportvorrichtung (1) in den Bestrahlungsbereich (6) eingebrachten Radiometers gegengeprüft und/oder nachkalibriert wird.

19. Verfahren nach mindestens einem der Ansprüche 12 bis 18,
**dadurch gekennzeichnet,**
**dass** aus der in den Bestrahlungsbereich (6) eingestrahlten Bestrahlungsstärke und der Transportgeschwindigkeit die in ein lackiertes Werkstück eingebrachte Strahlungsenergie pro Flächeneinheit (Belichtung) ermittelt wird.
